# EUROPÄISCHE PATENTANMELDUNG

(11) **EP 2 148 091 A1**
(43) Veröffentlichungstag der Anmeldung: **27.01.2010**
(21) Anmeldenummer: 08013430.7
(22) Anmeldetag: 25.07.2008
(51) Int. Cl.: F03G 7/04, F01K 25/14

(54) **Verfahren zur Energieerzeugung, insbesondere zur Erzeugung von elektrischer Energie**

(71) Anmelder: INNOTEC Energie und Umwelt GmbH, 45128 Essen (DE)
(72) Erfinder: Bund, Karlheinz, Dr., 45133 Essen (DE)
(74) Vertreter: Rohmann, Michael

(57) **Zusammenfassung**

Verfahren zur Energieerzeugung, insbesondere zur Erzeugung von elektrischer Energie, wobei Erdwärme aus dem Erdreich zu einer Energieerzeugungsstation gefördert wird. Die Erdwärme bzw. Wärme wird in der Energieerzeugungsstation auf ein fluides Medium, vorzugsweise auf ein Lösungsmittel übertragen, so dass das fluide Medium bzw. Lösungsmittel entsprechend erhitzt wird und vorzugsweise verdampft wird. Fernerhin ist zumindest eine Verbrennungskraftmaschine vorgesehen und die Abgaswärme der Verbrennungskraftmaschine wird auf das fluide Medium bzw. Lösungsmittel übertragen, so dass das fluide Medium bzw. Lösungsmittel zusätzlich erhitzt wird. Das gasförmige, zusätzlich erhitzte fluide Medium bzw. Lösungsmittel wird über zumindest eine Energieumwandlungseinheit entspannt.

## Beschreibung

Die Erfindung betrifft ein Verfahren zur Energieerzeugung, insbesondere zur Erzeugung von elektrischer Energie.

Verfahren zur Gewinnung von elektrischer Energie sind aus der Praxis grundsätzlich bekannt. Meist wird in einem Kraftwerk ein Energieträger verbrannt und mit der Verbrennungswärme unter hohem Druck stehender Wasserdampf erzeugt. Grundsätzlich hat es sich bewährt, den unter hohem Druck stehenden Wasserdampf durch Abkühlen zu entspannen und mit der dabei freiwerdenden Energie Turbinenräder, die mit einem Generator verbunden sind, anzutreiben. Da der Wirkungsgrad der Stromerzeugung mit sinkender Temperatur und abnehmendem Druck des Wasserdampfes stark sinkt, wird die Wärmeenergie des Wasserdampfs niedrigerer Temperatur in einem Wärmetauscher auf ein Wärmeträgermedium übertragen, mit dem insbesondere ein Fernwärmenetz versorgt wird. Aufgrund der steigenden Preise für Rohstoffe und der zunehmenden Kohlendioxidbelastung der Atmosphäre ist der Wirkungsgrad der Stromerzeugung verbesserungsbedürftig.

Der Erfindung liegt daher das technische Problem zugrunde, ein Verfahren anzugeben, mit dem Energie bzw. elektrische Energie mit einem hohen Wirkungsgrad erzeugt werden kann, bei dem wenig atmosphärenschädigendes Kohlendioxid erzeugt wird und das einfach an einen schwankenden Energiebedarf anpassbar ist.

Zur Lösung dieses technischen Problems lehrt die Erfindung ein Verfahren zur Energieerzeugung, insbesondere zur Erzeugung von elektrischer Energie, wobei Erdwärme aus dem Erdreich zu einer Energieerzeugungsstation gefördert wird,
wobei die Erdwärme bzw. Wärme in der Energieerzeugungsstation auf ein fluides Medium, vorzugsweise auf ein Lösungsmittel übertragen wird, so dass das fluide Medium bzw. Lösungsmittel entsprechend erhitzt wird und vorzugsweise verdampft wird,
wobei die Abgaswärme zumindest einer Verbrennungskraftmaschine, insbesondere zumindest eines Verbrennungsmotors zusätzlich auf das fluide Medium bzw. Lösungsmittel übertragen wird
und wobei das zusätzlich erhitzte gasförmige fluide Medium bzw. Lösungsmittel über zumindest eine Energieumwandlungseinheit entspannt wird.

Nachfolgend wird durchgängig der Begriff Verbrennungsmotor verwendet. Mit diesem Begriff ist aber auch ganz allgemein eine Verbrennungskraftmaschine gemeint, insbesondere auch eine Strömungsmaschine wie beispielsweise eine Gasturbine. - Die Erdwärme und die Abgaswärme des Verbrennungsmotors wird vorzugsweise auf ein Lösungsmittel und bevorzugt auf ein organisches Lösungsmittel übertragen. Grundsätzlich kann im Rahmen der Erfindung aber jedes fluide Medium eingesetzt werden, das sich mit Hilfe der Erdwärme erhitzen lässt, vorzugsweise verdampfen lässt.

Prinzipiell gibt es verschiedene Möglichkeiten Erdwärme aus dem Erdreich an die Erdoberfläche bzw. zu einer Energieerzeugungsstation zu fördern. Nach sehr bevorzugter Ausführungsform der Erfindung wird ein Wärmeträgermedium durch zumindest eine Zuführungsleitung in das Erdreich eingeführt und tritt aus zumindest einer Austrittsöffnung der Zuführungsleitung in das Erdreich aus, wobei das Wärmeträgermedium von der Austrittsöffnung über einen Strömungsabstand s das Erdreich durchdringt und zu zumindest einer Abführungsöffnung zumindest einer Förderleitung geführt wird, wobei das Wärmeträgermedium durch die Erdwärme erwärmt wird, wobei das erwärmte Wärmeträgermedium über die Förderleitung abgefördert wird und wobei die Erdwärme bzw. Wärme des abgeförderten Wärmeträgermediums auf das Lösungsmittel übertragen wird.

Mit Erdreich sind im Rahmen der Erfindung vor allem Gestein und insbesondere kristalline Gesteine sowie hochpermeable Gesteinsschichten, so genannte Aquiphäre gemeint. Kristalline Gesteine sind beispielsweise Granit oder Gneise. Fernerhin umfasst der Begriff Erdreich im Rahmen der Erfindung so genannte Störungszonen. Dabei handelt es sich um Bruchzonen oder Bruchflächen, die in Sedimentgestein wie kristallinem Gestein auftreten können. Es hat sich bewährt, die Austrittsöffnungen und die Abführungsöffnungen für das Wärmeträgermedium in einer Tiefe von 1500 m bis 7000 m, vorzugsweise von 2000 m bis 7000 m und bevorzugt von 3000 m bis 7000 m anzuordnen. Der Strömungsabstand s ist der Abstand zwischen Austrittsöffnung und Abführungsöffnung. Es empfiehlt sich ein flüssiges Wärmeträgermedium, vorzugsweise Wasser einzusetzen. Das Wärmeträgermedium wird zweckmäßigerweise unter hohem Druck durch die Zuführungsleitung und Austrittsöffnung in das Erdreich bzw. in eine geothermale Quelle gepresst, durchströmt das Erdreich über den Strömungsabstand s und wird durch die Abführungsöffnung und die Förderleitung zur Erdoberfläche gefördert. Es liegt im Rahmen der Erfindung, dass das Wärmeträgermedium durch die Erdwärme auf eine Temperatur von 100°C bis 220°C, vorzugsweise von 120°C bis 190°C und insbesondere auf eine Temperatur von 160°C bis 180°C und beispielsweise auf eine Temperatur von 170°C bzw. ungefähr 170°C erhitzt wird.

Das Lösungsmittel, auf das erfindungsgemäß die Wärme des Wärmeträgermediums übertragen wird, besitzt empfohlenermaßen einen niedrigeren Siedepunkt als das Wärmeträgermedium. Vorzugsweise wird das bereits erwärmte Lösungsmittel durch die Abgaswärme des Verbrennungsmotors überhitzt. Es empfiehlt sich also, das Lösungsmittel mit der Maßgabe auszuwählen, dass das Lösungsmittel durch die Übertragung der Abgaswärme des Verbrennungsmotors auf das Lösungsmittel überhitzt wird. Überhitzt meint im Rahmen der Erfindung, dass das Lösungsmittel über die kritische Temperatur erhitzt wird, so dass das Lösungsmittel ausschließlich im gasförmigen Aggregatzustand vorliegt. Grundsätzlich kann als Lösungsmittel zumindest ein organisches und/oder ein zumindest ein anorganisches Lösungsmittel eingesetzt werden. Es empfiehlt sich, als Lösungsmittel zumindest eine Komponente aus der Gruppe "Ammoniak, Pentan, Butan" auszuwählen. In einer bevorzugten Ausführungsform wird ein organisches Lösungsmittel und insbesondere Pentan als Lösungsmittel eingesetzt. Pentan meint im Rahmen der Erfindung zumindest eine Komponente aus der Gruppe "iso-Pentan, n-Pentan, neo-Pentan".

Es liegt im Rahmen der Erfindung, dass das Lösungsmittel durch die Abgaswärme des Verbrennungsmotors auf zumindest 190°C und vorzugsweise auf zumindest 210°C erhitzt wird. In einer Ausführungsform des Verfahrens wird das Lösungsmittel auf eine Temperatur von 220°C bzw. ungefähr 220°C erhitzt. In einer weiteren Ausführungsform wird das Lösungsmittel auf eine Temperatur von zumindest 240°C, vorzugsweise zumindest 250°C und bevorzugt von zumindest 270°C erhitzt. Es hat sich bewährt, dass das Lösungsmittel über seine kritische Temperatur hinaus erhitzt wird.

Vorzugsweise wird die Abgaswärme des Verbrennungsmotors auf ein zweites Wärmeträgermedium übertragen und dann von dem zweiten Wärmeträgermedium auf das Lösungsmittel übertragen. Zweckmäßigerweise beträgt die Temperatur der Abgase des Verbrennungsmotors 600°C bis 1100°C und vorzugsweise 700°C bis 900°C. Gemäß einer Ausführungsform beträgt die Temperatur der Abgase 800°C bzw. ungefähr 800°C. Empfohlenermaßen wird die Abgaswärme des Verbrennungsmotors in einem ersten Wärmetauscher auf das zweite Wärmeträgermedium übertragen. Es liegt im Rahmen der Erfindung, dass die Temperatur der Abgase nach dem Durchströmen des ersten Wärmetauschers 200°C bis 400°C und vorzugsweise 280°C bis 320°C beträgt. Empfohlenermaßen wird als zweites Wärmeträgermedium ein Thermoöl eingesetzt. Zweckmäßigerweise wird das Thermoöl in dem ersten Wärmetauscher erwärmt. Als Thermoöl wird vorzugsweise ein synthetisches und/oder mineralische Öl eingesetzt. Es empfiehlt sich, das Thermoöl in einem geschlossenen Thermoölkreislauf umzupumpen. Vorzugsweise wird das erwärmte Thermoöl durch einen zweiten Wärmetauscher bzw. einen Überhitzer gefördert. In einer bevorzugten Ausführungsform wird in dem zweiten Wärmetauscher bzw. Überhitzer die Wärme des Thermoöls mit der Maßgabe auf das Lösungsmittel übertragen, dass das Lösungsmittel zumindest zusätzlich erhitzt und bevorzugt überhitzt wird.

Es liegt im Rahmen der Erfindung, dass mit dem gasförmigen Lösungsmittel zumindest eine Energieumwandlungseinheit betrieben wird, mit der zweckmäßigerweise Wärmeenergie in mechanische Energie umgewandelt wird. In einer besonders bevorzugten Ausführungsform der Erfindung wird mit dem gasförmigen Lösungsmittel eine Einheit zur Stromerzeugung bzw. ein Generator angetrieben. Es empfiehlt sich, dass mit dem gasförmigen vorzugsweise organischen Lösungsmittel zumindest eine Turbine angetrieben wird, die zweckmäßigerweise mit einem Generator zur Stromerzeugung verbunden ist. Empfohlenermaßen wird somit im Rahmen der Erfindung nach einem ORC-Verfahren (Organic Rankine Cycle-Verfahren) gearbeitet. In einer Ausführungsform des Verfahrens wird das gasförmige Lösungsmittel über zumindest zwei Turbinen, die jeweils mit einem Generator verbunden sind, entspannt bzw. abgekühlt. Es liegt im Rahmen der Erfindung, dass die Temperatur des entstpannten Lösungsmittels 80°C bis 140°C, vorzugsweise 90°C bis 130°C, insbesondere 100°C bis 120°C und beispielsweise 115°C bzw. ungefähr 115°C. Es empfiehlt sich, dass das Lösungsmittel gasförmig aus der Energieumwandlungseinheit austritt. Die beim Austritt aus der Energieumwandlungseinheit in dem Lösungsmittel gespeicherte Wärmemenge wird hier als Restwärme bezeichnet.

Gemäß einer empfohlenen Ausführungsform wird die Restwärme des entspannten Lösungsmittels auf einen Regenerator übertragen. Regenerator meint im Rahmen der Erfindung ein Aggregat, das als Wärmetauscher bzw. Erhitzer und/oder als Wärmespeicher fungiert. Es hat sich bewährt, dass der Regenerator als Wärmetauscher bzw. Erhitzer die Restwärme des Lösungsmittels auf ein Fluid überträgt.

In einer bevorzugten Ausführungsform wird der Regenerator als Erhitzer eines Stirlingmotors eingesetzt. Ein Stirlingmotor ist bekanntlich eine Wärmekraftmaschine, bei der grundsätzlich eine Temperaturdifferenz zwischen einem Kühler niedriger Temperatur und dem Erhitzer höherer Temperatur in mechanische Arbeit umgewandet wird. Dazu wird zunächst in einem Kompressionsraum ein Fluid, vorzugsweise ein Gas, isotherm bei niedriger Temperatur komprimiert und in einen Expansionsraum geleitet. Dort wird das Fluid auf die höhere Temperatur des Erhitzers erwärmt, wodurch es sich ausdehnt und mechanische Arbeit zu leisten vermag. Der Regenerator dient vorzugsweise als Wärmquelle bzw. Erhitzer für das in dem Expansionsraum des Stirlingmotors befindliche Fluid. Zweckmäßigerweise wird die in dem Stirlingmotor erzeugte mechanische Arbeit bzw. Energie einer weiteren Energieumwandlungseinheit zugeführt. Empfohlenermaßen treibt der Stirlingmotor einen Generator an. Beim Zurückleiten des Fluids aus dem Expansionsraum in den Kompressionsraum wird die Wärme des Fluids vorzugsweise an den Regenerator übertragen und in dem Regenerator gespeichert.

Es hat sich bewährt, dass die Kondensationswärme beim Kondensieren des gasförmigen Lösungsmittels auf ein drittes Wärmeträgermedium übertragen wird. Empfohlenermaßen wird die Kondensationswärme mittels eines dritten Wärmetauschers bzw. eines Kondensators auf ein drittes Wärmeträgermedium übertragen. Die Kondensationswärme wird vorzugsweise mittels des dritten Wärmeträgermediums an zumindest einen Wärmeverbraucher transportiert und bevorzugt durch den Wärmeverbraucher abgeführt. Das abgekühlte, dritte Wärmeträgermedium wird zweckmäßigerweise zu dem dritten Wärmetauscher bevorzugt in einem geschlossenen Kreislauf zurückgefördert.

Vorzugsweise wird die beim Betrieb des Verbrennungsmotors entstehende Motorwärme auf ein viertes Wärmeträgermedium übertragen. Die Motorwärme wird zweckmäßigerweise auf zumindest ein Kühlmedium übertragen, das einem vierten Wärmetauscher zugeführt wird. Als Kühlmedium kann beispielsweise zumindest ein Schmiermittel und/oder Kühlwasser dem vierten Wärmetauscher zugeführt werden. Die mit dem Kühlmedium von dem Verbrennungsmotor abgefördete Wärme wird vorzugsweise auf ein viertes Wärmeträgermedium übertragen, das empfohlenermaßen die Wärme zu einem Verbraucher transportiert. Gemäß einer Ausführungsform wird das vierte Wärmeträgermedium am Verbraucher abgekühlt und zweckmäßigerweise in einem geschlossenen Kreislauf zurück zu dem vierten Wärmetauscher gefördert.

Nach sehr bevorzugter Ausführungsform der Erfindung ist der Verbrennungsmotor ein Biomotor. Biomotor meint einen Verbrennungsmotor, der mit Biomasse, insbesondere mit Pflanzenöl, beispielsweise Rapsöl betrieben wird. Der bevorzugte Biomotor kann grundsätzlich mit den verschiedensten Brennstoffen auf pflanzlicher und eventuell tierischer Basis betrieben werden. In einer Ausführungsform wird mit dem Verbrennungsmotor bzw. Biomotor ein Generator angetrieben. Grundsätzlich ist es möglich, dass mit dem Verbrennungsmotor eine beliebig ausgestaltete Maschine bzw. Vorrichtung angetrieben wird. - Eine besonders bevorzugte Ausführungsvariante der Erfindung ist **dadurch gekennzeichnet, dass** durch Veränderung der Leistung des Verbrennungsmotors, insbesondere des Biomotors die erzeugte Energie, insbesondere die erzeugte elektrische Energie an den aktuellen Energiebedarf angepasst wird. Vor allem mit einem Biomotor ist eine solche Anpassung auf sehr einfache und präzise Weise möglich.

Der Erfindung liegt die Erkenntnis zugrunde, dass mit dem erfindungsgemäßen Verfahren insbesondere elektrische Energie sehr umweltschonend und mit einem unerwartet hohen Wirkungsgrad erzeugt werden kann. Das Verfahren zeichnet sich dadurch aus, dass es optimal an einen aktuellen Stromverbrauch anpassbar ist. Auf plötzlich ansteigende Stromverbräuche kann vor allem durch die Veränderung der Leistung des Verbrennungsmotors auf einfache und problemlose Weise spontan reagiert werden. Zusätzlich kann das Volumen des durch die geothermale Quelle geleiteten Wärmeträgermediums erhöht werden, so dass zusätzliche thermische Energie, die beispielsweise in Strom umgewandelt werden kann, zur Verfügung steht. Die Übertragung der Abgaswärme des Verbrennungsmotors auf das durch das Wärmeträgermedium erhitzte Lösungsmittel gewährleistet eine optimale Nutzung der Verbrennungswärme des Kraftstoffes in dem Verbrennungsmotor. Durch die erfindungsgemäße zusätzliche Erhitzung des Lösungsmittels kann ein optimaler Wirkungsgrad in der Energieumwandlungseinheit erreicht werden. Weiterhin liegt der Erfindung die Erkenntnis zugrunde, dass ein Stirlingmotor in vorteilhafter Weise zur Stromerzeugung herangezogen werden kann, dessen Erhitzer mit der nur schlecht nutzbaren Restwärme des die Energiegewinnungseinheit verlassenden Lösungsmittels gespeist wird. Im Ergebnis zeichnet sich eine nach dem erfindungsgemäßen Verfahren betriebene Anlage durch einen optimalen bzw. überraschend hohen Wirkungsgrad aus.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch eine Vorrichtung zur Förderung von Erdwärme und
- Fig. 2: ein Verfahrensschema für eine Anlage (Energieerzeugungsstation) zur Durchführung des erfindungsgemäßen Verfahrens.

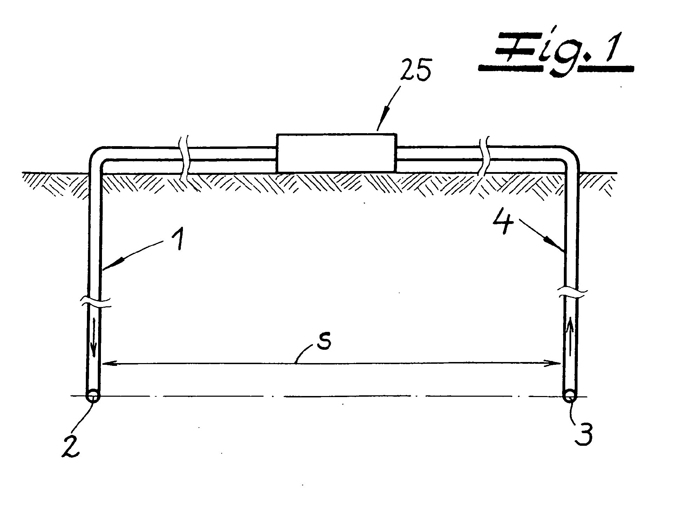

Die Figuren betreffen eine Anlage zur Durchführung des erfindungsgemäßen Verfahrens zur Energieerzeugung, insbesondere zur Erzeugung von elektrischer Energie. Grundsätzlich ist es möglich, dass mit dem erfindungsgemäßen Verfahren neben elektrischer auch thermische Energie erzeugt wird. Fig. 1 zeigt eine Vorrichtung zur Förderung von Erdwärme, bei der in eine geothermische Quelle ein Wärmeträgermedium durch eine Zuführungsleitung 1 mit einer Austrittsöffnung 2 in das Erdreich gepresst wird. Von der Austrittsöffnung 2 durchströmt das Wärmeträgermedium über einen Strömungsabstand s das Erdreich zu einer Abführungsöffnung 3, wobei das Wärmeträgermedium durch die Erdwärme erwärmt wird. Im Ausführungsbeispiel beträgt der Strömungsabstand s 400 m bis 600 m. Das Wärmeträgermedium wird durch die Abführungsöffnung 3 und die Förderleitung 4 empfohlenermaßen zu einer Energieerzeugungsstation 25 an der Erdoberfläche gefördert und zwar im Ausführungsbeispiel zu einem Verdampfer 5 dieser Energieerzeugungsstation 25. Die Austrittsöffnung 2 und die Abführungsöffnung 3 sind beispielsweise in einer Tiefe von 4000 m bis 5000 m in dem Erdreich angeordnet.

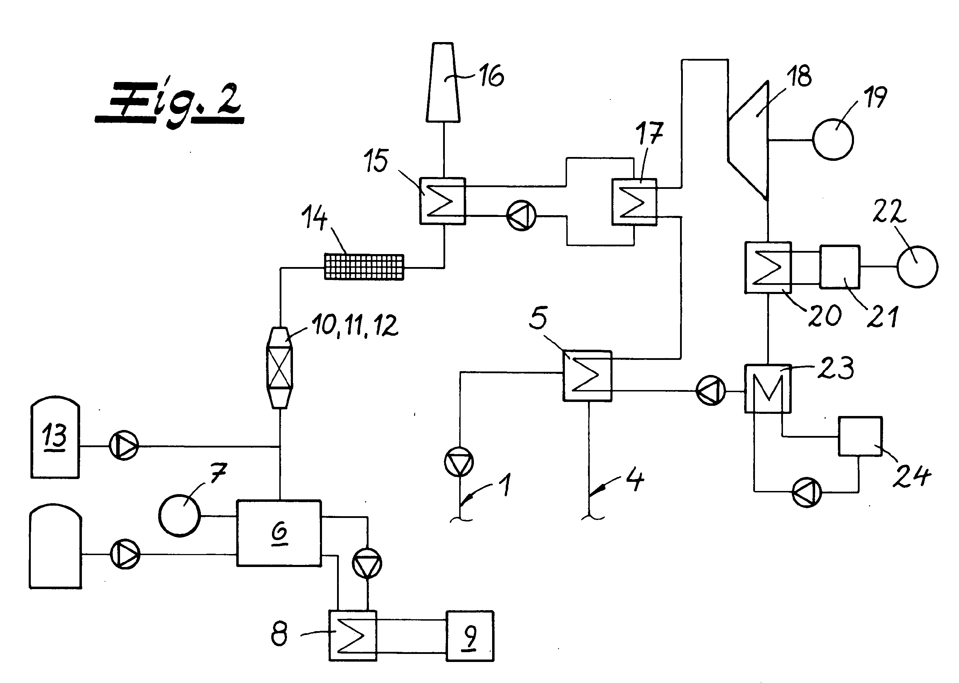

Im Ausführungsbeispiel (Fig. 2) wird in dem Verdampfer 5 die Wärme des Wärmeträgermediums auf ein organisches Lösungsmittel, vorzugsweise Pentan, übertragen, so dass das Lösungsmittel verdampft wird. Nach besonders bevorzugter Ausführungsform und im Ausführungsbeispiel ist zumindest ein Biomotor 6 als Verbrennungsmotor vorgesehen, mit dem ein Generator 7 zur Erzeugung von elektrischem Strom angetrieben wird. Die beim Betrieb des Biomotors 6 erzeugte Motorwärme wird zweckmäßigerweise mittels zumindest eines Kühlmediums abgefördert. Als Kühlmedium wird beispielsweise zumindest ein Schmieröl und/oder Kühlwasser eingesetzt. Es empfiehlt sich, die auf das Kühlmedium übertragene Wärme in einem vierten Wärmetauscher 8 auf ein viertes Wärmeträgermedium zu übertragen, das in einem Kreislauf einem Verbraucher 9, beispielsweise einer Heizvorrichtung, zugeführt wird.

Zur Verminderung der Emissionen werden in dem Ausführungsbeispiel die Abgase des Biomotors 6 einer Abgasreinigungseinheit zugeführt, die zumindest einen Oxidationskatalysator 10, zumindest einen SCR-Katalysator (Selective-Catalytic-Reaction-Katalysator) 11 und zumindest einen Rußfilter 12 aufweist. Den Abgasen wird vorzugsweise zunächst aus einem Harnstofftank 13 Harnstoff zugesetzt, so dass die Stickoxide in dem SCR-Katalysator 11 zu Stickstoff reduziert werden. Der Oxidationskatalysator 10 oxidiert empfohlenermaßen Verbrennungsrückstände beispielsweise Kohlenwasserstoffe und/oder Kohlenmonoxid zu nicht bzw. mindertoxischen chemischen Verbindungen. Möglicherweise gebildete Rußpartikel werden mittels des Rußfilters 12 aus den Abgasen des Biomotors 6 entfernt. Es hat sich bewährt, im Abgasstrom des Biomotors einen Schalldämpfer 14 anzuordnen.

Im Ausführungsbeispiel beträgt die Temperatur der Abgase des Biomotors 6 800°C bzw. ungefähr 800°C, welche Abgase durch einen ersten Wärmetauscher 15 geführt werden. In dem ersten Wärmetauscher 15 wird die Abgaswärme vorzugsweise auf ein Thermoöl übertragen. Dabei werden die Abgase in dem Ausführungsbeispiel auf 280°C bis 300°C abgekühlt und über einen Kamin 16 an die Umwelt abgegeben.

In einem zweiten Wärmetauscher bzw. Überhitzer 17 wird im Ausführungsbeispiel die Wärme des Thermoöls auf das Lösungsmittel übertragen, wobei die kritische Temperatur des Lösungsmittels vorzugsweise überschritten wird. Das Lösungsmittel liegt empfohlenermaßen ausschließlich im gasförmigen Aggregatzustand vor. Die Temperatur des überhitzten und vorzugsweise unter Druck stehenden Lösungsmittels liegt bevorzugt und im Ausführungsbeispiel bei zumindest 220°C. Das bei der Wärmeübertragung auf das Lösungsmittel abgekühlte Thermoöl wird empfohlenermaßen in einem geschlossen Kreislauf zurück zu dem ersten Wärmetauscher 15 gepumpt.

Im Ausführungsbeispiel wird das überhitzte und empfohlenermaßen unter Druck stehende Lösungsmittel über zumindest eine Turbinenstufe 18 entspannt und/oder abgekühlt. Mit der durch die Turbinenstufe 18 erzeugten Drehbewegung wird bevorzugt ein Generator 19 zur Stromerzeugung angetrieben. Zweckmäßigerweise tritt das Lösungsmittel gasförmig aus der Turbinenstufe 18 aus. Beispielsweise beträgt die Temperatur des gasförmigen Lösungsmittels am Ausgang der Turbine 18 100°C bis 130°C.

Im Ausführungsbeispiel durchströmt das gasförmige Lösungsmittel einen Regenerator 20 der als Erhitzer und/oder Wärmespeicher eines Stirlingmotors 21 ausgebildet ist. Der Stirlingmotor 21 wandelt die Temperaturdifferenz zwischen dem Erhitzer und einem nicht dargestellten Kühler in mechanische Arbeit um. Im Ausführungsbeispiel arbeitet der Regenerator 20 bei einer Temperatur von ca. 100°C bis ca. 130°C. Empfohlenermaßen weist der Kühler ein niedrigeres Temperaturniveau auf, das beispielsweise ungefähr 20°C beträgt. Im Betrieb des Stirlingmotors 21 wird ein Fluid auf dem Temperaturniveau des Kühlers isotherm in einem nicht dargestellten Kompressionsraum komprimiert und in einen ebenfalls nicht dargestellten Expansionsraum gefördert. In dem Expansionsraum wird auf das komprimierte Fluid die Wärmeenergie des Regenerators 20 übertragen, so dass sich das Fluid ausdehnt. Die bei der Ausdehnung frei werdende mechanische Energie kann insbesondere auf einen Generator 22 zur Stromerzeugung übertragen werden.

Vorzugsweise tritt das Lösungsmittel gasförmig aus dem Regenerator 20 aus und wird im Ausführungsbeispiel zu einem dritten Wärmetauscher bzw. Kondensator 23 geleitet. Es empfiehlt sich, das Lösungsmittel in dem Kondensator 23 zu kondensieren bzw. zu verflüssigen. Die Kondensationswärme des Lösungsmittels wird bevorzugt auf ein drittes Wärmeträgermedium übertragen, das vorzugsweise in einem Kreislauf zu einem Verbraucher 24 gepumpt wird. Empfohlenermaßen wird nach der Abkühlung des dritten Wärmeträgermediums durch den Verbraucher 24 das dritte Wärmeträgermedium in dem Kondensator 23 wieder erwärmt. Das Lösungsmittel wird im Ausführungsbeispiel im flüssigen Aggregatzustand unter Druck gesetzt und zu dem Verdampfer 5 gepumpt.

## Patentansprüche

1. Verfahren zur Energieerzeugung, insbesondere zur Erzeugung von elektrischer Energie, wobei Erdwärme aus dem Erdreich zu einer Energieerzeugungsstation (25) gefördert wird,
wobei die Erdwärme bzw. Wärme in der Energieerzeugungsstation (25) auf ein fluides Medium, vorzugsweise auf ein Lösungsmittel übertragen wird, so dass das fluide Medium bzw. Lösungsmittel entsprechend erhitzt wird und vorzugsweise verdampft wird,
wobei die Abgaswärme zumindest einer Verbrennungskraftmaschine zusätzlich auf das fluide Medium bzw. Lösungsmittel übertragen wird
und wobei das zusätzlich erhitzte gasförmige fluide Medium bzw. Lösungsmittel über zumindest eine Energieumwandlungseinheit entspannt wird.

2. Verfahren nach Anspruch 1, wobei ein Wärmeträgermedium durch zumindest eine Zuführungsleitung (1) in das Erdreich eingeführt wird und aus zumindest einer Austrittsöffnung (2) der Zuführungsleitung (1) in das Erdreich austritt, wobei das Wärmeträgermedium von der Austrittsöffnung (2) über einen Strömungsabstand s das Erdreich durchdringt und zu zumindest einer Abführungsöffnung (3) zumindest einer Förderleitung (4) geführt wird, wobei das Wärmeträgermedium durch die Erdwärme erwärmt wird, wobei das erwärmte Wärmeträgermedium über die Förderleitung (4) abgefördert wird und wobei die Erdwärme bzw. Wärme des abgeförderten Wärmeträgermediums auf das fluide Medium bzw. Lösungsmittel übertragen wird.

3. Verfahren nach einem der Ansprüche 1 oder 2, wobei das zusätzlich erhitzte fluide Medium bzw. Lösungsmittel überhitzt wird.

4. Verfahren nach einem der Ansprüche 1 bis 3, wobei das zusätzlich erhitzte fluide Medium bzw. Lösungsmittel auf zumindest 190°C und vorzugsweise auf zumindest 210°C erhitzt wird.

5. Verfahren nach einem der Ansprüche 1 bis 4, wobei die Abgaswärme der Verbrennungskraftmaschine auf ein zweites Wärmeträgermedium übertragen wird und von dem zweiten Wärmeträgermedium auf das fluide Medium bzw. Lösungsmittel übertragen wird.

6. Verfahren nach einem der Ansprüche 1 bis 5, wobei die Restwärme des entspannten fluiden Mediums bzw. Lösungsmittels auf einen Regenerator 20 als Erhitzer eines Stirlingmotors (21) übertragen wird.

7. Verfahren nach einem der Ansprüche 1 bis 6, wobei die Kondensationswärme beim Kondensieren des gasförmigen fluiden Mediums bzw. Lösungsmittels auf ein drittes Wärmeträgermedium übertragen wird.

8. Verfahren nach einem der Ansprüche 1 bis 7, wobei die Motorwärme der als Verbrennungsmotor ausgebildeten Wärmekraftmaschine auf ein viertes Wärmeträgermedium übertragen wird.

9. Verfahren nach einem der Ansprüche 1 bis 8, wobei die Verbrennungskraftmaschine ein Biomotor ist.

10. Verfahren nach Anspruch 9, wobei mit dem Biomotor (6) ein Generator (7) angetrieben wird.
